# EUROPÄISCHE PATENTSCHRIFT

(11) **EP 3 132 668 B1**
(45) Veröffentlichungstag und Bekanntmachung des Hinweises auf die Patenterteilung: **14.11.2018**
(21) Anmeldenummer: 16001560.8
(22) Anmeldetag: 14.07.2016
(51) Int. Cl.: A01D 80/02, A01D 78/10

(54) **HEUWERBUNGSMASCHINE MIT VERBESSERTEM KREISELARM**
HAYMAKING MACHINE WITH IMPROVED ROTOR ARM
FANEUSE COMPRENANT UN BRAS DE TOUPIE AMELIORE

(30) Priorität: 19.08.2015 DE 102015010891
(43) Veröffentlichungstag der Anmeldung: 22.02.2017
(73) Patentinhaber: Maschinenfabrik Bernard Krone GmbH & Co. KG, 48480 Spelle (DE)
(72) Erfinder: Leifeling, Karl, 48477 Hörstel-Bevergern (DE); Helper, Erik, 48465 Quendorf (DE)

(56) Entgegenhaltungen:
- EP-A2- 1 929 857
- NL-A- 7 307 724

## Beschreibung

Die Erfindung betrifft ein landwirtschaftliches Arbeitsgerät gemäß dem Oberbegriff des Anspruchs 1. Derartige Maschinen sind als solche aus dem Stand der Technik bekannt.

Heuwerbungsmaschinen werden besonders für die Vorbereitung von Erntegut und/oder Erntegutresten zur weiteren Verarbeitung eingesetzt. Dabei werden besonders Heu, Stroh und ähnliche stängelartigen Erntegüter mit Heuwerbungsmaschinen, wie beispielsweise Zettwendern, im Folgenden auch als Wender bezeichnet, oder Schwadern bearbeitet. Im Falle eines Wenders wird beispielsweise von einer Mähmaschine geschnittenes Gras, welches nach dem Mähen zum Trocknen auf einem landwirtschaftlichen Feld belassen wird, gewendet und durch die schnelle Rotation der Kreisel von den Zinken angeschlagen, also quasi beschädigt, um eine schnellere Trocknung erreichen zu können. Sobald das Gras getrocknet ist, werden Schwader eingesetzt, um das breit verstreute Heu zu kompakten Wällen, sogenannten Schwaden zusammen zu führen.

Besonders beim Wenden kann es allerdings durch die Wirkweise eines Zettwenders dazu kommen, dass sich beispielsweise Heubüschel an den einzelnen Kreiselarmen ansammeln, was eine Folge von aufgeworfenem Heu und den Drehgeschwindigkeiten der Kreisel ist. In der Luft befindliches Heu wird von den Kreiselarmen erfasst und durch die auftretenden Zentrifugalkräfte zum äußeren Kreiselarmende geführt, wo das Heu zwischen den Kreiselarm und den daran befestigten Zinken und/oder der Befestigungselementen der Zinken eingeklemmt wird. Sobald sich die ersten Reste des Heus festsetzen, wird weiteres Festsetzen von aufgewirbeltem Heu vereinfacht. Die hierbei entstehenden Heubüschel sind nicht nur ein Ärgernis vor und während Straßenfahrten, indem sie den Bediener der Maschine vorher zu einer Reinigung und Wartung zwingen, um die Straße nicht zu verunreinigen. Sie können darüber hinaus auch das Streubild negativ beeinflussen, also die Maschinenfunktion beeinträchtigen. Gerade für die gewünschte, zügige Trocknung des Ernteguts ist eine gleichmäßige Verteilung vorteilhaft. Durch die beschriebene Problematik kann eine zuverlässige und gleichbleibende Verteilung jedoch nicht uneingeschränkt gewährleistet werden.

Auch beim Einsatz eines Schwaders kann diese Problematik auftreten. Wenngleich der Effekt hierbei in der Regel nicht so gravierend auftritt, da die Zinken länger ausgebildet sind und ein Schwader durch eine geringere Drehzahl der Arbeitskreisel weniger Heu aufwirbelt, als mehr in eine vorgegebene Richtung führt, so kann auch hier eine einfache und günstige Lösung wünschenswert erscheinen.

Im Stand der Technik werden Schutzhauben vorgeschlagen, welche die Enden der Zinken, die am Kreiselarm befestigt werden, bis zu einem Knick im Kreiselarm verdecken. Diese Lösung erfüllt zumindest sekundär einen ähnlichen Zweck, allerdings ist diese Lösung nicht für alle Bauarten von Heuwerbungsmaschinen anwendbar, da sich diese Lösung auf einen bestimmten Aufbau, beziehungsweise eine bestimmte Form der Kreiselarme bezieht. Dazu kommt, dass eine speziell entwickelte Schutzhaube hinderlich bei der Montage, beim Austausch oder der Wartung sein kann, unnötig hohe Zusatzkosten verursacht und je nach Ausführung unnötiges Gewicht mit sich bringt.

Die DE 17 57 033 A offenbart eine Vorrichtung zur Bearbeitung von am Boden liegendem Erntegut mit einem Rechglied mit einer Anzahl von Speichen, an deren freien Enden federnde Zinken befestigt sind. Damit sich an den Windungen der Zinken nicht das bei der Bearbeitung umhergewirbelte Erntegut aufhängt, sind diese Windungen mit einer die Windungen wenigstens teilweise umgebenden Abschirmkappe umgeben. Entgegen den Absichten zur Vermeidung von zwischen den Windungen sich aufhängendem Erntegut schafft man jedoch eine neue Einklemmstelle, die sich zwischen den Windungen der Zinken und der Abschirmkappe ausbildet.

Die Aufgabe der präsentierten Erfindung besteht somit darin, diesen Mangel am Stand der Technik zu beheben. Hierzu wird eine Heuwerbungsmaschine derart weiterentwickelt, dass eine Lösung der zuvor genannten Herausforderungen angeboten wird, welche universeller, kostengünstiger, montage- und wartungsfreundlicher ist und zugleich zuverlässig die störungsfreie Maschinenfunktion sichergestellt.

Erfindungsgemäß wird diese Aufgabe durch die kennzeichnenden Merkmale des Anspruchs 1 bewältigt. Vorteilhafte Weiterbildungen der Erfindung sind Gegenstand der weiteren Ansprüche und des Ausführungsbeispiels.

Nach der Erfindung wird eine Heuwerbungsmaschine geschaffen, bestehend aus einem Rahmen, an dem wenigstens ein, um eine Achse rotierend betreibbarer Arbeitskreisel angebracht ist, welcher sich mit Hilfe von zumindest einem darunter angeordneten Rad zum Boden hin abstützt und über Kreiselarme verfügt, an denen jeweils Zinken zur Erntegutbearbeitung angeordnet sind, wobei zumindest ein Kreiselarm wenigstens ein Element aufweist, welches einen Versatz und/oder Stufen an dem Kreiselarm ausgleicht, die durch Montage von Zinken entstehen und wobei das Element als Ring ausgebildet ist und der Ring vor der Zinkenmontage auf den Kreiselarm aufschiebbar und im Anschluss an die Montage an den Zinken heranführbar ist und der Ring zur Kreiselmitte hin konisch zuläuft und zum Zinken hin einen Außendurchmesser aufweist, der dem Außendurchmesser der Zinkenwicklungen zumindest ähnelt.

Die vorgestellte Heuwerbungsmaschine ist also mit Elementen ausgestattet, welche einfach und kostengünstig herzustellen sind, über möglichst geringes Eigengewicht verfügen und eine Ansammlung von Erntegut und/oder Erntegutresten an den Kreiselarmen verhindern oder zumindest erschweren.

Bevorzugt wird hierbei eine Ausführung einer Heuwerbungsmaschine, deren Zinkenträger Elemente aufweisen, welche den Versatz, beziehungsweise die auftretende Stufe ausgleicht, die zwischen Zinken und Zinkenträger konstruktions-bedingt entsteht. Speziell Stufen und Versatz, von der Kreiselmitte radial nach außen gesehen auftretend, gilt es zu vermindern. Ganz besonders wird hierbei ein Element in Ringform bevorzugt. Dieser Ring wird vor der Zinkenmontage auf den Zinkenträger, also den Kreiselarm geschoben und im Anschluss an die Montage der Zinken an diese herangeführt. Er läuft zur Kreiselmitte hin konisch zu und weist zum Zinken hin einen Außendurchmesser auf, der dem Außendurchmesser der Zinkenwicklungen zumindest ähnelt. Der innen liegende Bereich kann dabei an jedes Profil eines Zinkenarms angepasst werden, sodass sowohl Rundprofile, als auch quadratische oder vieleckige Profile mit einem Abweiselement versehen werden können. Um kein unnötiges Gewicht einzubringen, wird vorgeschlagen, als Werkstoff einen Kunststoff zu verwenden. Ein solches Element ist schnell und einfach gefertigt, dadurch günstig in der Herstellung, beziehungsweise im Einkauf. Prinzipiell wird an dieser Stelle die Aufgabe bereits gelöst. Sinnigerweise sieht diese Ausführung allerdings zusätzlich eine integrierte Gummilippe vor, um unerwünschtem Verrutschen vorbeugen zu können. Denkbar ist stattdessen auch der Einsatz von Dichtringen, welche mit einer innen liegenden Nut im Kunststoffring eingebracht werden können, um einen ähnlichen Effekt zu erzielen. Weitere Möglichkeiten der Fixierung sind denkbar, lassen allerdings einen erhöhten Kosten- und/oder Zeitaufwand vermuten. So ist beispielsweise die Befestigung mittels Schrauben, Spannstiften, Bolzen, Passfedern, Klemmen, Spannsätzen, Klebstoffen oder sonstigen denkbaren Alternativen vorstellbar.

Nützlich wäre weiterhin eine Ausführung als zwei- oder mehrteiliges Element, welches beispielsweise, einem Klemmring ähnlich, schraubbar zusammengefügt werden kann. Anstelle einer Schraubverbindung kann ein solches Element natürlich anderweitig gefügt werden. Besonders sinnvoll gestaltet sich darüber hinaus der Einsatz von miteinander verrastbar ausgebildeten Elementen. Damit wird der Austausch oder eine Nachrüstung an bereits im Einsatz befindliche Maschinen vereinfacht.

Eine Umsetzung derartiger, ringförmiger Elemente ist auch mit anderen Werkstoffen denkbar. So kann zum Beispiel an eine Ausführung eines grade beschriebenen Rings als Metall-Bauteil gedacht werden. Geschickt wäre an dieser Stelle eine Ausführung als eine Art Schirm, um kein unnötiges Gewicht anzubringen. In diesem Fall kann auch eine Schweißverbindung erstellt werden. Diese Ausführung bringt zwar einen erhöhten Fertigungs- und/oder Montageaufwand mit sich, könnte sich aber dennoch als nützlich erweisen.

Eine weitere zweckmäßige Ausführung sieht einen Zinkenträger vor, welcher bereits eine ausgleichende, möglichst konische Form eingearbeitet hat. Hierbei kann beispielsweise ein als Rohr ausgeführter Kreiselarm zu dem Ende hin, an dem Zinken angebracht werden sollen, durch Stauchen oder ähnliche umformende Methoden eine wulstähnliche Verformung eingelassen werden, welche den üblichen Versatz zwischen Zinkenträger und dem daran fixierten, gewickelten Zinkenende direkt ausgleicht.

Ebenfalls sehr einfallsreich ist eine Ausführung die vorsieht, lediglich die nach oben gerichtete Hälfte der Zinkenwicklung durch ein abweisendes Element zu optimieren. Hierbei wird beispielsweise nur ein Ausschnitt eines zuvor beschriebenen Rings genutzt und mit Befestigungsmitteln am Zinkenträger angebracht. Denkbar ist hier eine zur Befestigung an dem Ringelement angeformte Lasche oder Strebe, welche unter/ über die Wicklungen eines Zinken reicht, um mit dem Zinken an der Zinkenfixierung befestigt zu werden. Auch Klemmelemente, welche in Verbindung mit dem abweisenden Ringelement stehen, möglicherweise angeformt sind, vergleichbar mit Spreiznieten können hier eingesetzt werden. Alternativ können zuvor erwähnte Befestigungsmittel wie Schrauben oder Ähnliches genutzt werden.

### Bezugszeichenliste:

- 1.: Heuwerbungsmaschine
- 2.: Dreipunkt-Aufhängung
- 3.: Rahmen
- 4.: Kreisel
- 5.: Kreiselgehäuse
- 6.: Kreiselarm
- 7.: Zinken
- 8.: Stützrad
- 9.: Schutzbügel
- 10.: Transportschutz
- 11.: Getriebe
- 12.: Verlustsicherung
- 13.: Zinkenfixierung
- 14.: Kreiselarmfixierung
- 15.: Versatz
- 16.: Erntegutrückstände
- 17.: Ausgleichselement
- 18.: Gummielement

- A.: Rotationsachse
- F.: Fahrtrichtung

Folgende Figuren dienen zur näheren Erläuterung der Erfindung, wodurch Einzelheiten und Vorteile der Erfindung deutlicher herausgestellt werden. Im Einzelnen zeigen:
**Fig.1** eine Teilansicht eines Zettwenders als Ausführungsbeispiel einer Heuwerbungsmaschine, ohne erfindungsgemäße Verbesserung der Zinkenarme,
**Fig.2** eine Schnittdarstellung eines Wenderkreisels mit Erntegutablagerungen, welche ohne die erfindungsgemäße Verbesserung entstehen,
**Fig.3** eine Darstellung eines, durch Merkmale der Erfindung, verbesserten Kreiselarms und
**Fig.4** eine Schnittdarstellung des in **Fig.3** vorgestellten Kreiselarms.

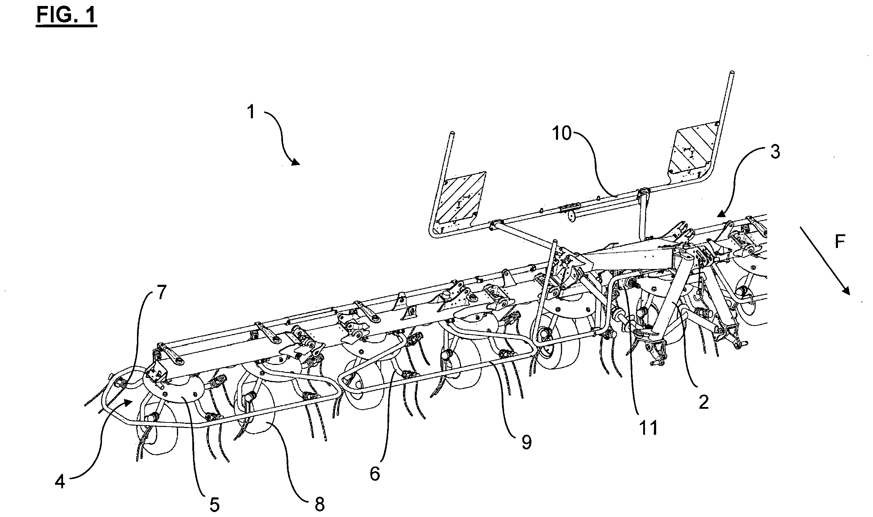

In **Fig.1** wird der, in Fahrtrichtung F gesehen, rechte Teil einer Heuwerbungs-maschine 1 in Arbeitsposition gezeigt. Hierbei sind die wesentlichen Elemente eines Zettwenders dargestellt, so auch die Verbindungsmöglichkeit zum Traktor, die Dreipunkt-Aufhängung 2, und der damit verbundene Rahmen 3, in dieser Ausführung in mehrere Rahmenelemente aufgeteilt, wodurch eine kompakte Transportstellung eingenommen werden kann. An dem Rahmen 3 befinden sich die Kreisel 4. Diese bestehen in der Regel aus einem Kreiselgehäuse 5, mit daran befestigten Kreiselarmen 6 und wiederum daran befindlichen Zinken 7. Zur Entlastung des Rahmens 3 befinden sich an den Kreiseln 4 Stützräder 8, welche darüber hinaus dafür Sorge tragen, dass die Kreisel 4 Unebenheiten im Boden überwinden können, ohne dass die Zinken 7 in direkten Kontakt mit diesem geraten, wodurch diese beschädigt würden. Zum Schutz vor Hindernissen und vor Allem auch zum Schutz für Menschen und Tiere, verfügen landwirtschaftliche Arbeitsmaschinen zumeist über Schutzvorrichtungen, wie in diesem Fall einen Schutzbügel 9. Um auch im Straßenverkehr mit dem angehängten Arbeitsgerät fahren zu können, lassen sich Heuwerbungsmaschinen 1, wie auch der dargestellte Wender, in eine Transportstellung versetzen, weswegen eine Transportschutz 10 eingesetzt wird. Hat eine Zugmaschine (nicht dargestellt) mit angehängter, oder auch gezogener Heuwerbungsmaschine 1 das zu bearbeitende Feld erreicht, wird die Maschine in die entsprechende Arbeitsstellung versetzt und über das Feld gefahren. Dabei treibt der Schlepper mit einer Zapfwelle über das Getriebe 11 der Heuwerbungsmaschine 1 die Kreisel 4 an, wodurch diese in Rotation um ihre jeweilige Rotationsachse A versetzt werden. Durch die Neigung der Kreisel 4 und der daran befindlichen Kreiselarme 6 und Zinken 7 wird das oberflächlich trockene Erntegut, wie zum Beispiel Heu, von den Zinken 7 aufgenommen und zum hinteren Maschinenende geschleudert. Dabei wird das Erntegut einerseits gewendet und andererseits angeschlagen, wodurch pflanzeneigene Flüssigkeiten schneller austreten können. Beide Faktoren begünstigen eine zügige Trocknung, sodass weitere Bearbeitungsschritte folgen können.

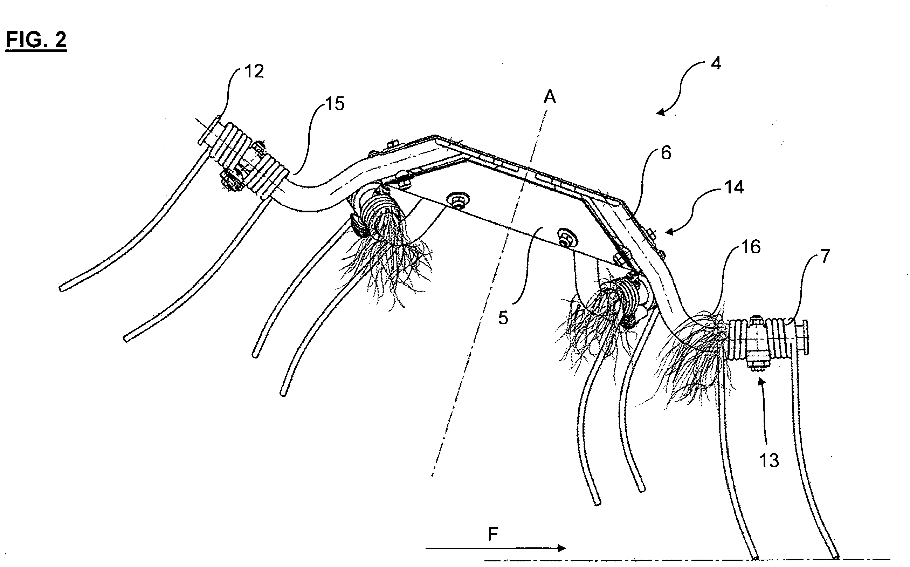

Der erwähnte Neigungswinkel der Kreisel 4 wird bei Betrachtung von **Fig.2** deutlich. Weiterhin wird das Problem, welches durch die vorgestellte Erfindung behoben wird, ersichtlich. Vom Kreiselgehäuse 5 ausgehend verlaufen die daran mittels Kreiselarmfixierung 14, in diesem Fall einer einfachen Schraubverbindung, befestigten Kreiselarme 6 nach außen. An deren äußerem Ende werden die Zinken 7 mit einer Zinkenfixierung 13 in Position gehalten. In diesem Fall handelt es sich um eine Klemme, eine Exzenterscheibe zur Einstellung der Zinken 7 und eine durch den Kreiselarm 6 geführte Schraubverbindung. In dieser Ausführung wird eine weitere Sicherheitsvorrichtung eingesetzt. Dabei handelt es sich um eine Verlustsicherung 12. Diese Verlustsicherung 12 hält den äußeren Teil der Zinken 7 bei etwaigen Bruch in der Windung davon ab, durch die hohe Drehgeschwindigkeit vom Kreiselarm 6 geworfen zu werden. Zum besseren Verständnis ist ein Zinkenarm 6 rückstandsfrei dargestellt, um den auftretenden Versatz 15 zwischen Kreiselarm 6 und Zinken 7 zu demonstrieren. Dieser Versatz 15 ist bei den übrigen Kreiselarmen 6 für die Verunreinigung durch Erntegutrückstände 16 am Zinken 7 verantwortlich. Folglich gilt es, diesen Versatz 15 zu verringern, oder auszugleichen.

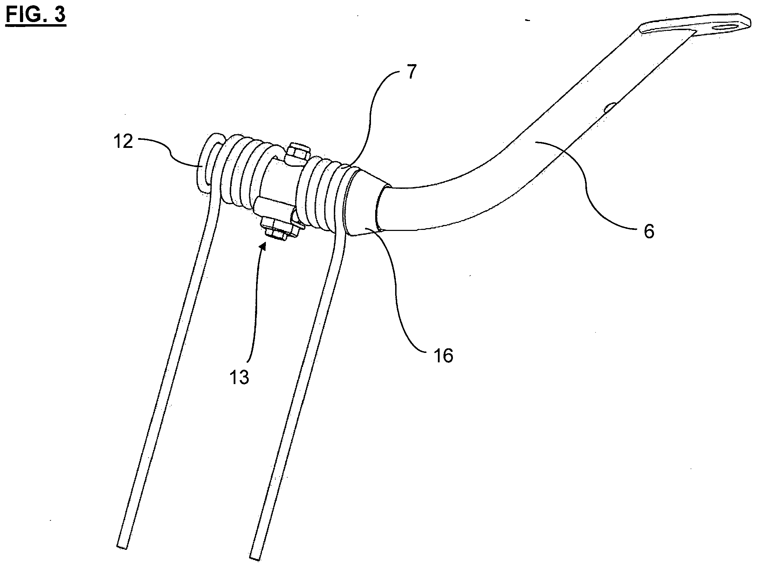

Der in **Fig.3** vorgestellte Kreiselarm 6 verfügt, im Gegensatz zu den bisher gezeigten Figuren, über eine trickreiche Erweiterung gemäß dem Anspruch 1, also ein Versatz 15 verringerndes Ausgleichselement 17. An dem Kreiselarm 6 befindet sich ein Zinken 7, ausgeführt als Doppelzinken, welcher mit Spiralwicklungen versehen ist. Durch diese Wicklungen ist der Zinken 7 in der Lage, bei Auftreffen auf ein Hindernis oder bei Kontakt mit dem Boden, federnd nachzugeben. Um den Zinken 7 mit dem Kreiselarm 6 sicher zu verbinden, kommt eine zuvor beschriebene Zinkenfixierung 13 zum Einsatz. Die Verlustsicherung 12 dient zur Sicherung von an der Wicklung gebrochener Zinken 7 und wird ebenfalls durch die Zinkenfixierung 13 in Position gehalten. Um den Versatz 15 zwischen Kreiselarm 6 und Zinken 7 an der Außenfläche des Rohrprofils auszugleichen, wird ein ringförmiges Ausgleichselement 17, in diesem Fall ein konisch zulaufender Ring, genutzt.

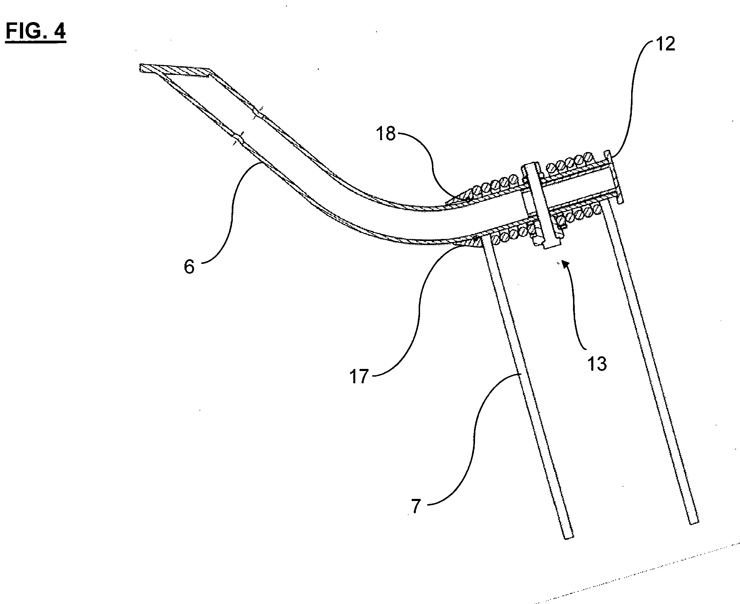

Die **Fig.4** lässt das eingesetzte Gummielement 18 erkennen, durch den das Ausgleichselement 17 in Position vor dem Zinken 7 gehalten wird. Darüber hinaus wird gut erkennbar, dass ohne das Ausgleichselement 17 ein Spalt zwischen Spiralwicklung des Zinkens 7 und dem Rohrprofil des Kreiselarms 6 auftritt, in dem sich Erntegut und Erntegutrückstände 16 verfangen können. Das Ausgleichselement 17 verdeckt diesen Spalt und gleicht zudem den Versatz 15 aus, welcher selbst bei eng anliegenden Wicklungen des Zinkens 7 am Kreiselarm 6 entstünde.

## Patentansprüche

1. Heuwerbungsmaschine bestehend aus einem Rahmen (3), an dem wenigstens ein, um eine Achse rotierend betreibbarer Arbeitskreisel (4) angebracht ist, welcher sich mit Hilfe von zumindest einem darunter angeordneten Rad (8) zum Boden hin abstützt und über Kreiselarme (6) verfügt, an denen jeweils Zinken (7) zur Erntegutbearbeitung angeordnet sind, wobei zumindest ein Kreiselarm (6) wenigstens ein Element (17) aufweist, welches einen Versatz (15) und/oder Stufen an dem Kreiselarm (6) ausgleicht, die durch Montage von Zinken (7) entstehen, **dadurch gekennzeichnet, dass** das Element (17) als Ring ausgebildet ist, wobei der Ring vor der Zinkenmontage auf den Kreiselarm (6) aufschiebbar und im Anschluss an die Montage an den Zinken (7) heranführbar ist und der Ring zur Kreiselmitte hin konisch zuläuft und zum Zinken (7) hin einen Außendurchmesser aufweist, der dem Außendurchmesser der Zinkenwicklungen zumindest ähnelt.

2. Heuwerbungsmaschine (1) nach Anspruch 1, **dadurch gekennzeichnet, dass** das ausgleichende Element (17) mit einer Fixierung (13) der Zinken (7) verbunden ist.

3. Heuwerbungsmaschine (1) nach Anspruch 1, **dadurch gekennzeichnet, dass** das ausgleichende Element (17) an eine Fixierung (13) der Zinken (7) angeformt ist.

4. Heuwerbungsmaschine (1) nach Anspruch 1, **dadurch gekennzeichnet, dass** das ausgleichende Element (17) an der zur Kreiselmitte gerichteten Seite eines Zinkens (7) angeformt ist.

5. Heuwerbungsmaschine (1) nach einem der vorherigen Ansprüche, **dadurch gekennzeichnet, dass** sich das ausgleichende Element (17) an das Profil des Kreiselarms (6) anpasst.

6. Heuwerbungsmaschine (1) nach Anspruch 5, **dadurch gekennzeichnet, dass** das ausgleichende Element (17) lösbar mit dem Kreiselarm (6) verbunden ist.

## Claims

1. Hay-making machine consisting of a frame (3) to which is attached at least one working rotor (4) that can be operated so as to rotate about an axis, is supported towards the ground by means of at least one wheel (8) arranged thereunder, and comprises rotary arms (6) on which tines (7) for processing harvested material are arranged in each case, at least one rotary arm (6) comprising at least one element (17) that compensates for an offset (15) and/or tiers on the rotary arm (6) resulting from the mounting of the tines (7), **characterised in that** the element (17) is designed as a ring, it being possible to slide the ring onto the rotary arm (6) before the tines are mounted and to guide the ring up to the tines (7) after said tines are mounted, and the ring tapering conically towards the rotor centre and having an outside diameter towards the tines (7) that is at least similar to the outside diameter of the tine windings.

2. Hay-making machine (1) according to claim 1, **characterised in that** the compensating element (17) is connected to a fixing means (13) of the tines (7).

3. Hay-making machine (1) according to claim 1, **characterised in that** the compensating element (17) is integrally formed on a fixing means (13) of the tines (7).

4. Hay-making machine (1) according to claim 1, **characterised in that** the compensating element (17) is integrally formed on the side of a tine (7) which is oriented towards the rotor centre.

5. Hay-making machine (1) according any of the preceding claims, **characterised in that** the compensating element (17) matches the profile of the rotary arm (6).

6. Hay-making machine (1) according to claim 5, **characterised in that** the compensating element (17) is detachably connected to the rotary arm (6).

## Revendications

1. Faneuse composée d'un châssis (3) muni d'au moins un rotor (4) entraîné en rotation autour d'un axe et qui s'appuie sur le sol par au moins une roue (8) située en dessous et qui comporte des bras de rotor (6) munis chacun de dents (7) pour le travail des produits de récolte,
- au moins un bras de rotor (6) étant muni d'au moins un élément (17) qui compense le décalage (15) et/ou le gradin au niveau du bras de rotor (6), résultant du montage des dents (7),
faneuse **caractérisée en ce que**
- l'élément (17) est sous la forme d'un anneau,
- l'anneau est emmanché sur le bras de rotor (6) avant le montage des dents, et il est rapproché des dents (7) après le montage, et
- l'anneau a une forme conique orientée vers le centre du rotor et un diamètre extérieur tourné vers les dents (7) qui est au moins voisin du diamètre extérieur des enroulements de dents.

2. Faneuse (1) selon la revendication 1,
**caractérisée en ce que**
l'élément compensateur (17) est relié à une fixation (13) des dents (7).

3. Faneuse (1) selon la revendication 1,
**caractérisée en ce que**
l'élément compensateur (17) est formé sur une fixation (13) des dents (7).

4. Faneuse (1) selon la revendication 1,
**caractérisée en ce que**
l'élément compensateur (17) est sur le coté d'une dent (7) tourné vers le milieu du rotor.

5. Faneuse (1) selon l'une des revendications précédentes,
**caractérisée en ce que**
l'élément compensateur (17) est adapté au profile du bras de rotor (6).

6. Faneuse (1) selon la revendication 5,
**caractérisée en ce que**
l'élément compensateur (17) est relié de manière amovible au bras de rotor (6).
